(19) Europäisches Patentamt

European Patent Office

Office européen des brevets

(11) EP 1 690 768 A1

(12) EUROPEAN PATENT APPLICATION

(43) Date of publication:
16.08.2006 Bulletin 2006/33

(51) Int Cl.:
*B60T 13/74* (2006.01)  *B60L 11/18* (2006.01)
*B60K 7/00* (2006.01)

(21) Application number: 05018503.2

(22) Date of filing: 25.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 14.02.2005 JP 2005036400

(71) Applicant: HITACHI, LTD.
Chiyoda-ku
Tokyo 100-8280 (JP)

(72) Inventors:
• Innami, Toshiyuki,
Hitachi Ltd
Chiyoda-ku
Tokyo 100-8220 (JP)
• Saito, Hiroyuki,
Hitachi Ltd
Chiyoda-ku
Tokyo 100-8220 (JP)

• Kadomukai, Yuuzou,
Hitachi Ltd
Chiyoda-ku
Tokyo 100-8220 (JP)
• Yasukawa, Daisuke,
Hitachi Ltd
Chiyoda-ku
Tokyo 100-8220 (JP)
• Kuramochi, Yuichi,
Hitachi Ltd
Chiyoda-ku
Tokyo 100-8220 (JP)
• Miyazaki, Hideki,
Hitachi Ltd
Chiyoda-ku
Tokyo 100-8220 (JP)

(74) Representative: Beetz & Partner
Patentanwälte
Steinsdorfstrasse 10
D-80538 München (DE)

(54) **Electromechanical disc brake system**

(57) The invention relates to a motor system for a vehicle, wherein motors (16ML, 16MR) are disposed in an unsprung part of the vehicle with reference to a suspension. Drive circuits (40L, 40R) using a rectangular-wave to drive the motors (16ML, 16MR) are disposed in the unsprung part. Voltage control circuits using a control voltage supplied from a battery B to the drive circuits (40L, 40R) are disposed in the sprung part of the vehicle (1) with reference to the suspension. The motors (16ML, 16MR) are three-phase synchronous motors.

*FIG. 1*

EP 1 690 768 A1

**Description**

BACKGROUND OF THE INVENTION

The present invention relates to a motor system for a vehicle . More particularly, it relates to a motor system for a vehicle with the motor disposed unsprung part with reference to suspensions in a vehicle.

The motor system for a vehicle, having suspensions between a car body and wheels and motors as rotary electric machine for vehicle disposed in an unsprung part of the vehicle, is known conventionally. Such known motor systems for vehicles are provided as: an electric parking brake and an electric brake disclosed in Japanese Patent Laid-Open No. 2004-122838 and Japanese Patent Laid-Open No. 2004-90774; and a system for producing a driving force (a so-called in-wheel motor) for an electric car or a hybrid car as disclosed in Japanese Patent Laid-Open No. 2003-211979. In the priorarts, abatterymounted on a vehicle is used as a power source for driving motors, and the battery voltage itself is supplied to the motors, i.e. rotary electric machines. Also, in such a conventional configuration, drive circuits for motors are separated from the motors.

The motor systems for a vehicle that include motors disposed in the unsprung part of the vehicle with reference to suspensions as described in Japanese Patent Laid-Open No. 2004-122838, Japanese Patent Laid-Open No. 2004-90774, and Japanese Patent Laid-Open No. 2003-211979 have subjects as described in the following.

Firstly, a current waveform for driving each motor is produced using a battery and each drive circuit which are disposed in sprung part of vehicle with reference to suspensions. On the other hand, the motor is disposed in the unsprung part of the vehicle with reference to suspensions. So that it is necessary to use a long harness to connect the drive circuit and the motor. To connect between the sprung part and the unsprung part, the AC harness is required to be, at least, as long as the sum (usually 1 meter or longer) of a suspension stroke and a distance to an inverter disposed in the sprung part. The battery voltage (12 V for general automobile cars) is supplied to the inverter after being reduced along a DC harness. The battery voltage thus reduced is then supplied to the corresponding motor after being further reduced significantly due to the use of the AC harness which is as long as described above. As a result, the motor disposed in the unsprung part is not supplied with an adequate voltage. To cope with the problem, it has been unavoidable to design a motor to be operable with a low voltage and a large current, eventually making the motor large.

Secondly, as each drive circuit for wheel is disposed in the sprung part, turning on and off the drive circuit generates electromagnetic noise in AC harness connecting the drive circuit and the corresponding motor. In a configuration where each inverter and the corresponding motor are separated, the AC harness is required to include three shielded wires. If, on the other hand, those inverter and motor are disposed, being combined together, in the unsprung part of the vehicle, it is necessary to mount large-capacity capacitors and noise filters in the unsprung part in order to suppress voltage fluctuations along DC harnesses connecting the drive circuit and the battery. This increases the unsprung load, thereby decreasing resistance to vibration and lowering suspension performance.

SUMMARY OF THE INVENTION

A first object of the present invention is to provide a small, light motor system for a vehicle with improved resistance to vibration.

A second object of the present invention is to provide a motor system for a vehicle which enables an unsprung load to be reduced and vehicle mobility (running performance) to be improved.

A third object of the present invention is to provide a motor system for a vehicle which enables the number of wire harnesses used for connection between a sprung part and an sprung part of a vehicle to be reduced. The present invention is characterized in that a motor system for a vehicle having suspensions between a car body and respective wheels, may comprise the following factors: motors for the vehicle disposed in an unsprung part of the vehicle with reference to the suspensions; drive circuits disposed in the unsprung part of the vehicle, to drive the motors using rectangular-wave power; and/or voltage controllers disposed in a sprung part of the vehicle with reference to the suspensions, to boost-control voltages supplied from a battery to the corresponding drive circuits.

Furthermore, the present invention is characterized in that a motor system for a vehicle having suspensions between a car body and respective wheels, may comprise the following factors: drive circuits for driving the motors respectively; and/or voltage controllers for boost-controlling voltages supplied from a battery to the corresponding drive circuits.

Still furthermore, the present invention is characterized in that a motor system for a vehicle having suspensions between a car body and respective wheels, may comprise the following factors: drive circuits which are disposed in the unsprung part of the vehicle, to drive the corresponding motors.

According to the present invention, a motor system for a vehicle can be made small and light and vibration resistance can be improved.

Furthermore, according to the present invention, the unsprung load can be reduced and vehicle mobility (running performance) can be improved.

Still furthermore, according to the present invention, the number of wire harnesses used for connections between the sprung part and the unsprung part can be reduced.

BRIEF DESCRIPTION OF THE DRAWINGS

FIG. 1 is a system block diagram showing, in a planar state, a vehicle equipped with a motor system for a vehicle according to a first embodiment of the present invention.

FIG. 2 is a block diagram showing, in a sectional state, an overall configuration of the vehicle equipped with the motor system for a vehicle according to the first embodiment.

FIG. 3 is a block diagram showing, in a planar state, a system configuration of the motor system for a vehicle according to the first embodiment.

FIG. 4 is a circuit diagram showing circuit configurations of a drive circuit and a boost circuit included in the motor system for a vehicle according to the first embodiment.

FIG. 5 is an operation waveform diagram of the drive circuit included in the motor system for a vehicle according to the first embodiment.

FIG. 6 is a system block diagram showing, in a planar state, an overall configuration of a vehicle equipped with a motor system for a vehicle according to a second embodiment of the present invention.

FIG. 7 is a block diagram showing, in a sectional state, an overall configuration of the vehicle equipped with the motor system for a vehicle according to the second embodiment.

FIG. 8 is a block diagram showing, in a planar state, a system configuration of the motor system for a vehicle according to the second embodiment.

FIG. 9 is an operation waveform diagram of a drive circuit included in the motor system for a vehicle according to the second embodiment.

FIG. 10 is a system block diagram showing, in a planar state, a vehicle equipped with a motor system for a vehicle according to a third embodiment of the present invention.

FIG. 11 is a block diagram showing, in a sectional state, an overall configuration of the vehicle equipped with the motor system for a vehicle according to the third embodiment.

DETAILED DESCRIPTION OF THE PREFERRED EMBODIMENTS

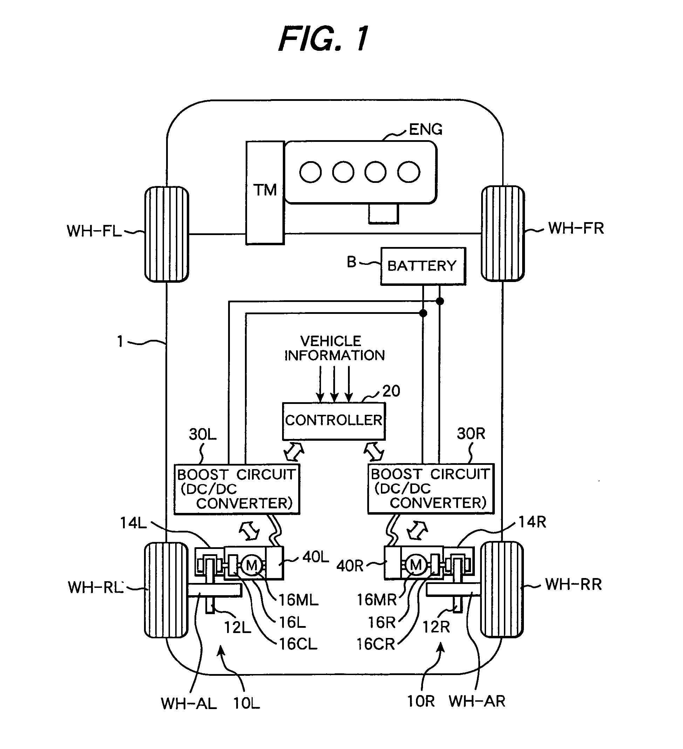

A configuration of a motor system for a vehicle according to a first embodiment of the present invention will be described with reference to FIGS. 1 to 5. Described in the following by way of an example is a motor system for a vehicle applied to an electric brake.

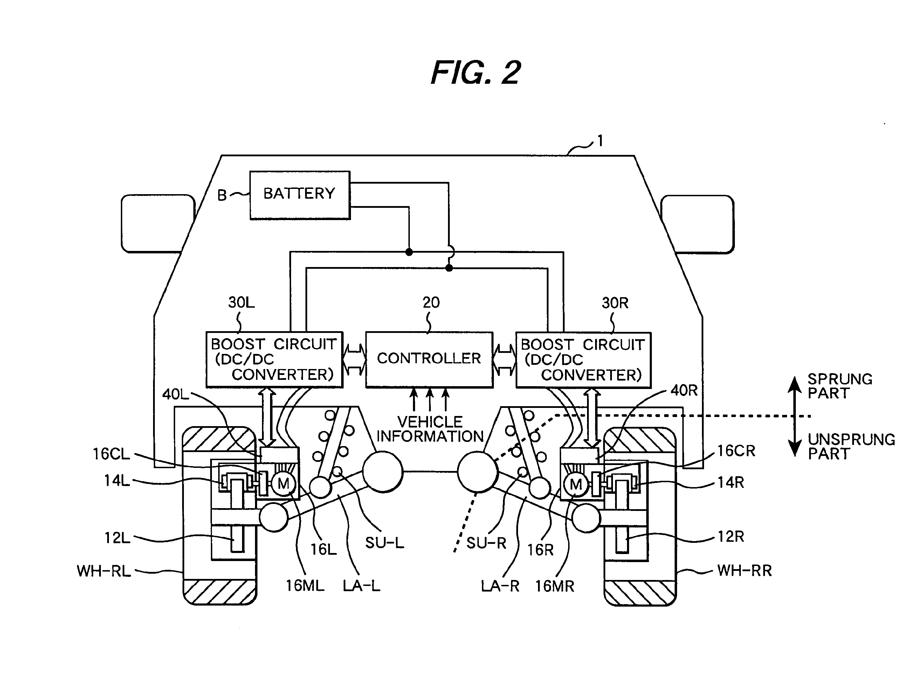

First, an overall configuration of a vehicle equipped with the motor system for a vehicle according to the present embodiment will be described with reference to FIGS. 1 and 2.

FIG. 1 is a system block diagram showing, in a planar state, an overall configuration of a vehicle equipped with the motor system for a vehicle according to the first embodiment of the present invention. FIG. 2 is a block diagram showing, in a sectional state, an overall configuration of the vehicle equipped with the motor system for a vehicle according to the first embodiment.

As shown in FIG. 1, a vehicle 1 includes two front wheels WH-FR and WH-FL and two rear wheels WH-RR and WH-RL. The driving force of an engine ENG is transmitted to the front wheels WH-RF and WH-FL via a transmission TM to drive the front wheels WH-RF and WH-FL.

The rear wheels WH-RR and WH-RL are equipped with electric disk brakes 10R and 10L, respectively. The mechanical system of the electric disk brake 10R includes a brake rotor 12R fixed to an axel WH-AR, a brake pad 14R, and an electric caliper 16R. Even though, only the rear wheels are provided with the electric brakes in the present embodiment, an electric brake may be provided for each of the four wheels including the front wheels. The electric caliper 16R includes a three-phase synchronous motor 16MR and a rotation-linear motion converter 16CR. Even though, the motor used in the present embodiment is three-phase synchronous motors, it may be asynchronous motors such as induction motors. The rotation-linear motion converter 16CR converts a rotational driving force outputted by the three-phase synchronous motor 16MR into a linear driving force. It may be, for example, a rack and pinion mechanism, a ball and ramp mechanism, or a ball screw mechanism. The rotation-linear motion converter 16CR, while converting a rotational driving force into a linear driving force, also serves as a speed reducer. If necessary to obtain an adequate speed reduction ratio, a separate speed reduction mechanism (for example, a planetary gear mechanism or a parallel axis reduction unit) may be installed.

The mechanical system of the electric brake 10L includes, like that of the electric brake 10R, a brake rotor 12L, a brake pad 14L, and an electric caliper 16L. The electric caliper 16L includes a three-phase synchronous motor 16ML and a rotation-linear motion converter 16CL.

An electric system for controlling and driving the three-phase synchronous motors 16MR and 16ML includes a controller 20 served as a host control unit, boost circuits 30R and 30L, and drive circuits 40R and 40L. The controller 20 operates the electric brakes 10R and 10L based on information provided by the vehicle. The boost circuits 30R and 30L are, for example, DC-DC converters. They boost a 12-V voltage of a battery B to voltages, for example, in a range of 24 V to 36 V and supply the boosted voltages to the drive circuits 40R and 40L, respectively. The drive circuits 40R and 40L are inverters which convert DC voltages supplied by the boost circuits 30R and 30L into three-phase AC voltages. The controller 20 controls boosting operations of the boost circuits 30R and 30L and also controls, based on vehicle information, braking forces produced by the electric brakes 10R and 10L. The vehicle information may be, for example, a depth to which the brake pedal is depressed, front and rear wheel speeds used to detect wheel slip of a vehicle equipped with an ABS (antilock braking system), or distance from a vehicle ahead or braking force itself of a vehicle equipped with an ACC (automatic cruise control) system.

Next, referring to FIG. 2, the axle 1 WH-AR of the rear wheel WH-RR is attached to the vehicle body via a suspension lower arm LA-R which makes up a linkage mechanism. A spring SU-R is suspended between the suspension lower arm LA-R and the vehicle body. Similarly, the axle 1 WH-AL of the rear wheel WH-RL is attached to the vehicle body via a suspension lower arm LA-L. A spring SU-L is suspended between the suspension lower arm LA-L and the vehicle body.

The suspension of the right rear wheel includes the suspension lower arm LA-R and the spring SU-R. The suspension of the left rear wheel includes the suspension lower arm LA-L and the spring SU-L. In the present specification, an expression "sprung part" is used in referring to a part above a suspension and an expression "unsprung part" is used in referring to a part below a suspension. The electromagnetic calipers 16R and 16L and the drive circuits 40R and 40L are disposed in an unsprung part. The controller 20 and the boost circuits 30R and 30L are disposed in a sprung part.

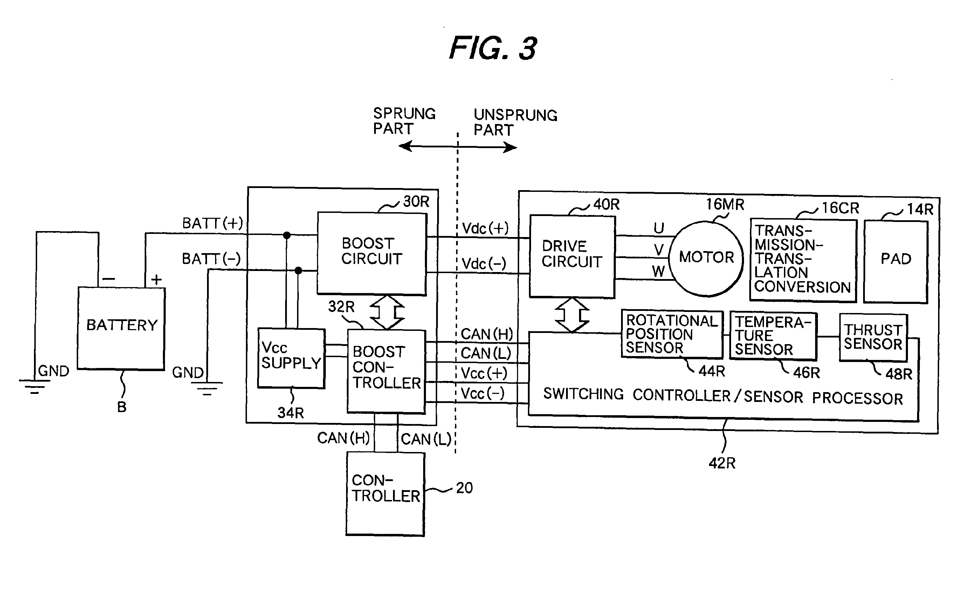

Next, with reference to FIG. 3, a system configuration of the motor system for a vehicle according to the present embodiment will be described.

FIG. 3 is a block diagram showing, in a planar state, a system configuration of the motor system for a vehicle according to the present embodiment. Reference numerals and letters which are the same as those shown in FIGS. 1 and 2 denote the same parts as those shown in FIGS. 1 and 2. The configuration shown is of the electric brake system for the right rear wheel. The electric brake system for the left rear wheel is configured similarly to the electric brake system for the right rear wheel.

The three-phase synchronous motor 16MR is a star-connected three-phase synchronous motor of a permanent magnet type. The permanent magnet used is a neodymium magnet.

In the vicinity of the three-phase synchronous motor 16MR, a rotational position sensor 44R for detecting the position (magnetic pole position) of a permanent magnet , and a temperature sensor 46R for sensing the temperature of the three-phase synchronous motor 16MR are provided. The rotational position sensor 44R includes a resolver or a hall element. In the vicinity of the brake pad 14R, a thrust sensor 48R is provided. The thrust sensor 48R may be, for example, a load cell. In the present embodiment, the pressing force of the pad is sensed using the thrust sensor. It is possible to estimate the pressing force of the pad based on a motor current and a motor position signal so as to omit the thrust sensor.

A switching controller/sensor processor 42R, served as drive controlling/sensor processing unit, controls turning on and off of switching elements included in the drive circuit 40R, to convert DC voltages Vdc (+) and Vdc (-) supplied by the boost circuit 30R into a three-phase AC voltage with the three phases being phase U, phase V and phase W. Then the processor 42R supplies the ac voltage thus generated to the three-phase synchronous motor 16MR. The controller 20, a boost controller 32R, and the switching controller/sensor processor 42R are connected through two CAN buses CAN (H) and CAN (L) with each other. The communication protocol used in the present embodiment is CAN. A larger capacity protocol (for example, FlexRay) may be used in the future. Signals sensed by the rotational position sensor 44R, the temperature sensor 46R, and the thrust sensor 48R are sent from the switching controller/sensor processor 42R to the controller 20 via the CAN buses CAN (H) and CAN (L).

The boost controller 32R controls turning on and off of switching elements included in the boost circuit 30R , to boost a DC voltage (for example, 12 V) supplied by the battery B to, for example, a voltage in the range of 24 V to 36 V. The voltage boosting ratio at the boost controller 32R can be changed using a control instruction transmitted from the controller 20 via the CAN buses CAN (H) and CAN (L). The boost controller 32R and the boost circuit 30R are served as a voltage controller for motor 16MR.

A Vcc supply 34R generates a prescribed voltage Vcc from the DC voltage supplied by the battery B. The Vcc supply 34R supplies the voltage Vcc to the boost controller 32R and the switching controller/sensor processor 42R.

The drive circuit 40R and the switching controller/sensor processor 42R are disposed in the unspurung part. The boost circuit 30R and the boost controller 32R are disposed in the sprung part. The boost circuit 30R and the drive circuit 40R are connected with two power wires Vdc (+) and Vdc (-) for power transmission. The boost controller 32R and the switching controller/sensor processor 42R are connected with two CAN buses CAN (H) and CAN (L) and two power wires Vcc (+) and Vcc (-) for signal transmission. That is, the number of wire harnesses used for connections between the unsprung part and the sprung part is six.

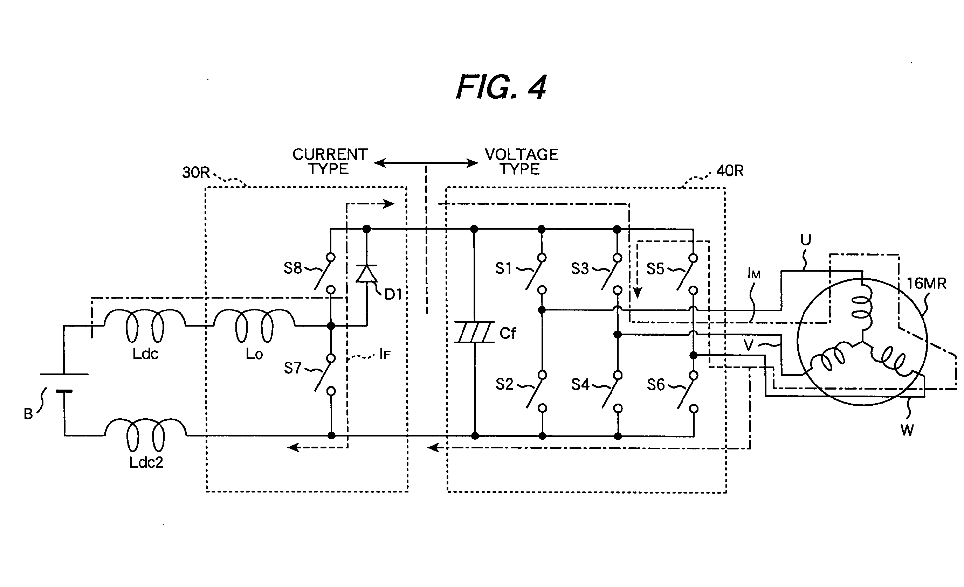

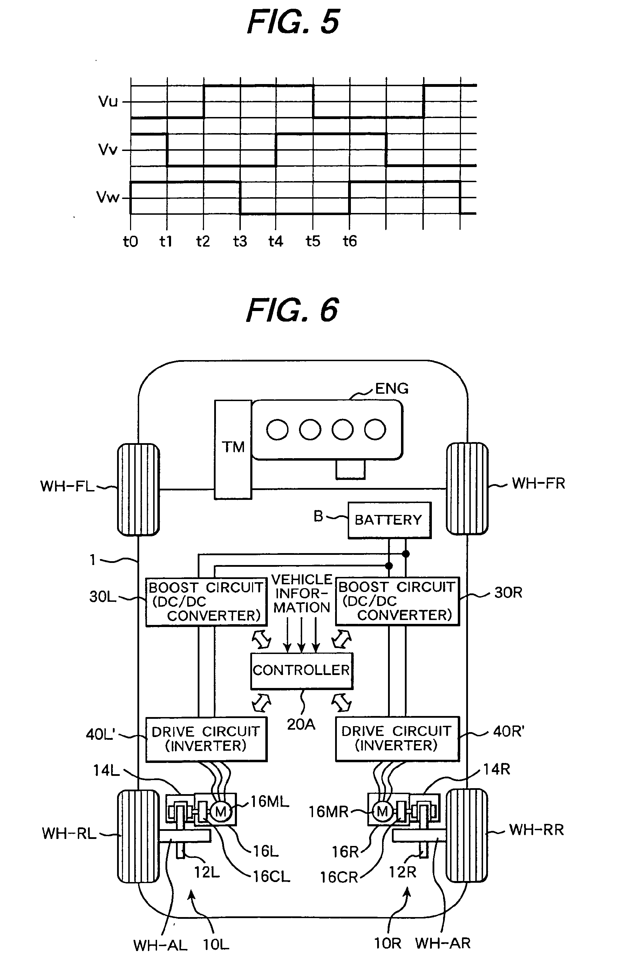

Next, with reference to FIGS. 4 and 5, circuit configurations of the drive circuit 40R and the boost circuit 30R included in the motor system for a vehicle according to the present embodiment will be described.

FIG. 4 is a circuit diagram showing the circuit configurations of the drive circuit and the boost circuit included in the motor system for a vehicle according to the present embodiment. Of the reference numerals and letters used in FIG. 4, those which are the same as reference numerals and letters used in FIGS. 1 to 3 denote the same parts as shown in FIGS. 1 to 3. FIG. 5 is an operation waveform diagram of the drive circuit included in the motor system for a vehicle according to the first embodiment.

The drive circuit 40R includes a phase-U upper arm switch S1, a phase-U lower arm switch S2 connected in series with the switch S1, a phase-V upper arm switch S3, a phase-V lower arm switch S4 connected in series with the switch S3, a phase-W upper arm switch S5, a phase-W lower arm switch S6 connected in series with the switch S5, and a capacitor Cf for surge prevention. The switches S1 to S6 may be, for example, MOSFET devices.

As shown in FIG. 5, the switches S1 to S6 are operated by rectangular waves of 180-degree conduction. That is, turning the switches S1 and S6 on and the other switches off causes a motor current IM to flow as shown by a chain line in FIG. 4. Thereby , voltage is applied to phase U and phase W. In FIG. 5, a period from time t0 to time t6 corresponds to one electrical cycle (an electrical angle of 360 degrees). During the cycle, at phase U, for example, S1 is off and S2 is on from time t0 to t2 and from time t5 to t6, whereas S1 is on and S2 is off from time t2 to t5. Thus, 180-degree conduction is carried out. Instead of 180-degree conduction, 120-degree conduction may be carried out. In that case, the "on" period of either one of the upper and lower arms ("on" period of S1 or S2 in the case of phase U, for example) corresponds to an electrical angle of 120 degrees.

When rectangular wave driving is used, compared with PWM driving, the switches do not repeat turning on and off at frequent intervals, so that it is not necessary to take into consideration flowing of an electric current into and out from the capacitor Cf. The capacitor Cf may therefore be a small-capacity capacitor for surge prevention (for example, a film capacitor or a ceramic capacitor).

The boost circuit 30R includes switches S7 and S8, a coil Lo, and a diode D1. Turning the switch S7 on and the switch S8 off, a current from the battery B IF flows, as shown by a broken line, thereby the coil Lo is charged. Turning the switch S7 off and the switch S8 on, the current charged into the coil Lo flows to the drive circuit 40R in addition to the current from the battery B as shown by a chain line. The following equation shows boosting of an input voltage Vin of the boost circuit 30R to an output voltage Vout:

$$Vout = (Ton + Toff) / Toff \times Vin$$

where Ton represents the "on" time of the switch S7 and Toff represents the "off" time of the switch S7.

When rectangular wave driving is applied to the drive circuit 40R, the output voltage of the boost circuit 30R is controlled by controlling the "on" time and the "off" time of the switch S7 (the "off" time and the "on" time of the switch S8) included in the boost circuit 30R. Thereby, the current passed through the motor 16MR is controlled, and the thrust generated in the electromagnetic brake is controlled.

In FIG. 4, inductances Ldc1 and Ldc2 represent wire harness inductances.

As described above, in the present embodiment, with rectangular wave driving applied to the drive circuit 40R, the switching frequency of the drive circuit 40R is about 200 Hz at the most (based on the assumption that the maximum rotating speed of the motor is 3000 rpm). Therefore, it is not necessary to take into consideration flowing of an electric current into and out from the capacitor Cf shown in FIG. 4. This allows the capacitor Cf to be a lightweight, small-capacity capacitor for surge prevention (for example, a film capacitor or a ceramic capacitor), so that the capacitor weight can be reduced. In a case where the drive circuit 40R is PWM driven, the switching frequency of the drive circuit 40R is about 10 kHz. This makes it necessary to use a large capacity capacitor (for example, an electrolytic capacitor) which has a heavy weight. As shown in FIG. 2, the drive circuit 40R is disposed in the unsprung part. Reducing the unsprung load of the vehicle improves the mobility (running performance) of the vehicle. Since a small-capacity capacitor can be used, the drive circuit 40R can be made compact making it possible to install the drive circuit 40R in the unsprung part to be a small space.

In the present embodiment, the drive circuit 40R and the switching controller/sensor processor 42R that controls the drive circuit 40R and processes signals from the sensors are disposed in the unsprung part. Therefore, not many wire harnesses are required for connections between the sprung part and the unsprung part. The wire harnesses used in the present embodiment are total six (two power wires Vdc (+) and Vdc (-) for power transmission, two CAN buses CAN (H) and CAN (L), and two power wires Vcc (+) and Vcc (-) for signal transmission). In a case where the drive circuit 40R is disposed in the sprung part and, as shown in FIG. 3, three sensors are used, the number of wire harnesses required is 14. That is, three, for phases U, V and W, between the drive circuit 40R and the motor 16MR, six (two inputs and four outputs), when a resolver is used as the rotational position sensor 44R, between the rotational position sensor 44R and the switching controller/sensor processor 42R, two between the temperature sensor and the switching controller/sensor processor 42R, and three between the thrust sensor 48R and the switching controller/sensor processor 42R. Each of the wire harnesses used for connections between the sprung part and the unsprung part is required to be, at least, about one meter long. In addition, the space available for wiring between the sprung part and the unsprung part is limited to be about the same as have been available for conventional hydraulic piping. When the number of wire harnesses used is large, harness reliability such as harness flexibility decreases. Reducing the number of wire harnesses as in the present embodiment facilitates wiring and improves wiring reliability.

In the present embodiment, the battery voltage is supplied to the motor 16MR after being boosted by the boost circuit 30R. In this way, compared with a case where the voltage is not boosted, the motor is powered using a high voltage and a small current. As the current flowing through the motor can be made small, small-diameter wires can be used for the stator winding of the motor and, eventually, the motor can be made compact. Use of a compact motor promotes solving problems attributable to limited space availability. It also contributes to reducing the unsprung load thereby enabling the mobility (running performance) of the vehicle to be improved. Even when the battery voltage lowers, the voltage is supplied to the motor after being boosted. Performance of the brake is therefore prevented from dropping excessively and robustness of the vehicle can be maintained. Furthermore, as described above, each of the wire harnesses used for connections between the sprung part and the unsprung part is required to be, at least, about one meter long. When a voltage drop attributable to wire harnesses is taken into consideration, using a small power current is advantageous because the voltage drop attributable to wire harnesses can be reduced. Eventually, power loss can be reduced and performance of the electric brake can be improved. A smaller current allows smaller-diameter wire harnesses to be used to improve wire harness flexibility.

Next, with reference to FIGS. 6 to 9, a configuration of a motor system for a vehicle according to a second embodiment of the present invention will be described. Described in the following by way of an example is a motor system for a vehicle applied to an electric brake.

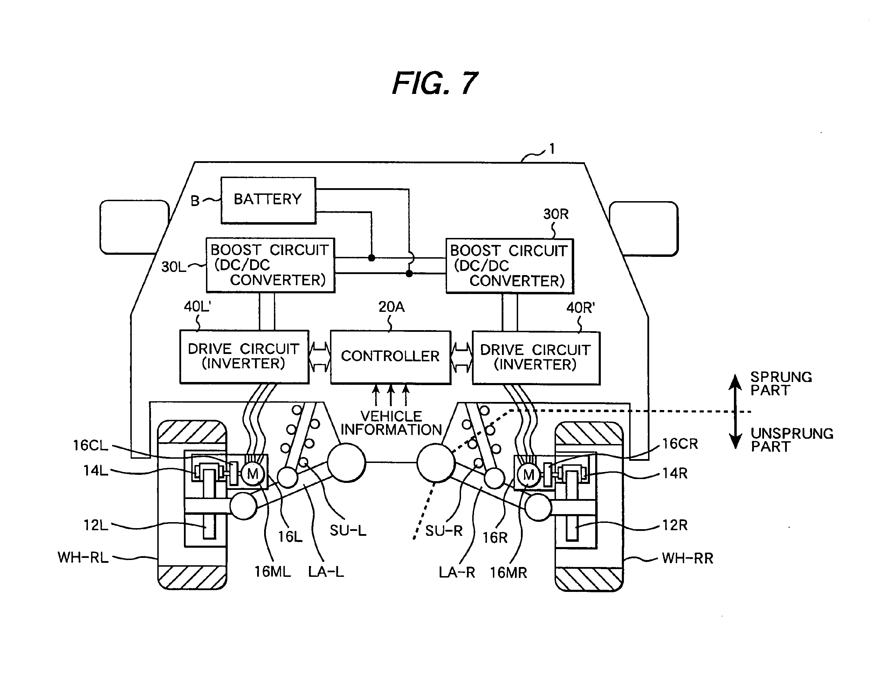

First, an overall configuration of a vehicle equipped with the motor system for a vehicle according to the present embodiment will be described with reference to FIGS. 6 and 7.

FIG. 6 is a system block diagram showing, in a planar state, an overall configuration of a vehicle equipped with the motor system for a vehicle according to the second embodiment. FIG. 7 is a block diagram showing, in a sectional state, an overall configuration of the vehicle equipped with the motor system for a vehicle according to the second embodiment. Of the reference numerals and letters used in FIGS. 6 and 7, those which are the same as reference numerals and letters used in FIGS. 1 and 2 denote the same parts as shown in FIGS. 1 and 2.

In the present embodiment, as shown in FIGS. 6 and 7, drive circuits 40R' and 40L' are disposed in the sprung part. The drive circuits 40R' and 40L' each have a configuration similar to that shown in FIG. 4, but the capacitor Cf used in each of them is an electrolytic capacitor for the reason stated in the following.

A controller 20A PWM drives the drive circuits 40R' and 40L'. The capacitor Cf, shown in FIG. 4, used in each of the drive circuits 40R' and 40L' is, therefore, a large-capacity electrolytic capacitor. The controller 20A makes control so as to keep the boosting ratio at the boost circuits 30R and 30L constant. The boost circuits 30R and 30L each have a configuration similar to that shown in FIG. 4. The "on" time and "off" time of the switch S7 are controlled to be constant. Whereas the boosting ratio is kept constant at the boost circuits 30R and 30L, the controller 20A controls the motor current IM by PWM driving the drive circuits 40R' and 40L'.

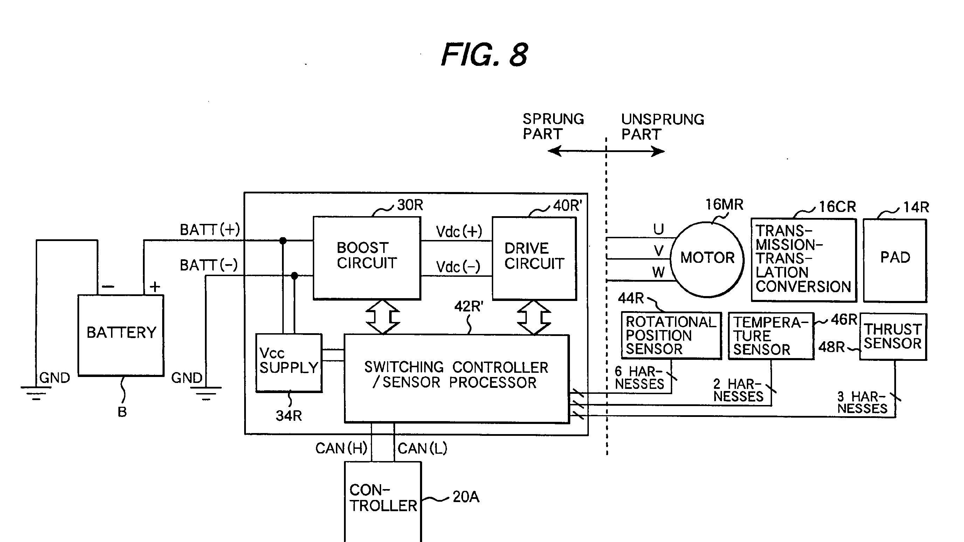

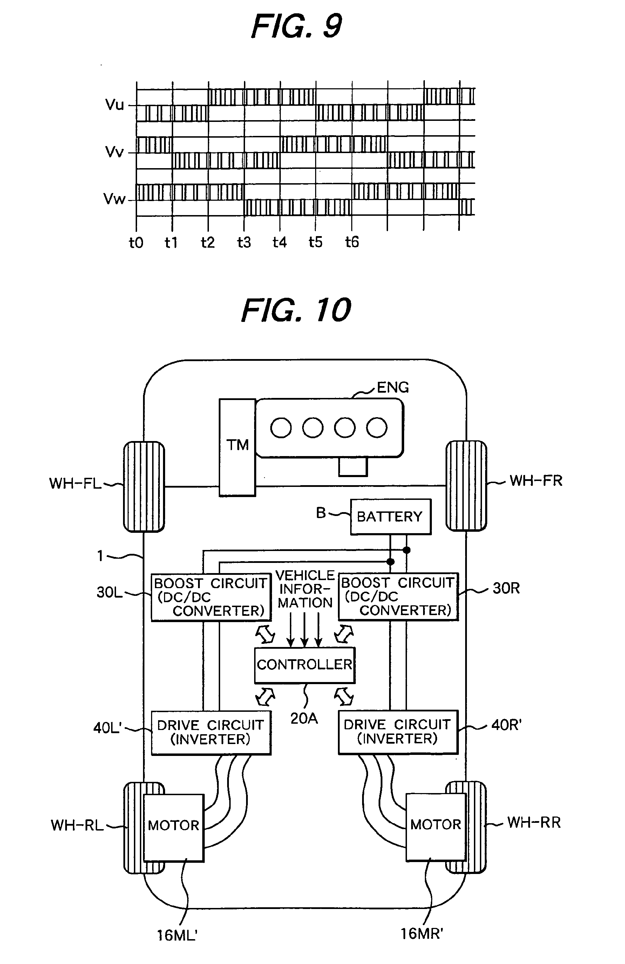

Next, with reference to FIGS. 8 and 9, a system configuration and operation of the motor system for a vehicle according to the present embodiment will be described.

FIG. 8 is a block diagram showing, in a planar state, a system configuration of the motor system for a vehicle according to the present embodiment. Reference numerals and letters which are the same as those shown in FIGS. 3, 6, and 7 denote the same parts as those shown in FIGS. 3, 6, and 7. The configuration shown is of the electric brake system for the right rear wheel. The electric brake system for the left rear wheel is configured similarly to the electric brake system for the right rear wheel. FIG. 9 is an operation waveform diagram of the drive circuit included in the motor system for a vehicle according to the second embodiment.

A switching controller/sensor processor 42R' controls turning on and off of switching elements included in the drive circuit 40R', to convert DC voltages Vdc (+) and Vdc (-) supplied by the boost circuit 30R into a three-phase AC voltage with the three phases being phase U, phase V and phase W. Then, the processor 42 R' supplies the AC voltage thus generated to the three-phase synchronous motor 16MR. The switching controller/sensor processor 42R' controls turning on and off of the switching elements included in the boost circuit 30R, to boost a DC voltage (for example, 12 V) supplied by the battery B to, for example, 36 V. The voltage boosting ratio at the boost controller 32R is usually maintained so that a constant output voltage is obtained, but the voltage boosting ratio can be changed using a control instruction transmitted from the switching controller/sensor processor 42R'. When the battery voltage is adequately high, for example, boosting may be stopped so as to reduce loss due to voltage boosting.

The controller 20A and the switching controller/sensor processor 42R' are connected with two CAN buses CAN (H) and CAN (L). The communication protocol used in the present embodiment is CAN. A larger capacity protocol (for example, FlexRay) maybe used in the future. Control instructions issued by the controller 20A to control the drive circuit 40R' are transmitted to the switching controller/sensor processor 42R' via the CAN buses CAN (H) and CAN (L). Signals detected by the rotational position sensor 44R, the temperature sensor 46R, and the thrust sensor 48R are used to drive the motor after being processed at the switching controller/sensor processor 42R'. Part of the information is sent to the controller 20A via the CAN buses CAN (H) and CAN (L).

The motor 16MR and the sensors 44R, 46R, and 48R are disposed in the unsprung part. In the present embodiment, the pressing force of the pad is sensed using the thrust sensor. It is possible to estimate the pressing force of the pad based on a motor current and a motor position signal so as to omit the thrust sensor. The drive circuit 40R', the switching controller/sensor processor 42R', and the boost circuit 30R are disposed in the sprung part. The drive circuit 40R' and the motor 16MR are connected with three wire harnesses, namely, for phases U, V and W. For connections between the switching controller/sensor processor 42R' and the sensors 44R, 46R, and 48R, a total of 11 wire harnesses are used. That is, six (two inputs and four outputs) between the rotational position sensor 44R and the switching controller/sensor processor 42R', two between the temperature sensor and the switching controller/sensor processor 42R', and three between the thrust sensor 48R and the switching controller/sensor processor 42R'.

The drive circuit 40R' has a configuration similar to that shown in FIG. 5, but the switches S1 to S6 are PWM driven as shown in FIG. 9. With the switches being PWM driven, it is possible to control the thrust of the electric brake by controlling the motor current.

As described above, in the present embodiment, with the drive circuit 40R' disposed in the sprung part, the unsprung load can be reduced and the mobility (running performance) of the vehicle can be improved. Also, a large-capacity capacitor (for example, an electrolytic capacitor) can be used as the capacitor included in the drive circuit 40R', so that it is possible to PWM drive the drive circuit 40R' and accurately control the motor current.

Furthermore, in the present embodiment, the battery voltage is supplied to the motor 16MR after being boosted by the boost circuit 30R. In this way, compared with a case where the voltage is not boosted, the motor is powered using a high voltage and a small current. As the current flowing through the motor can be made small, small-diameter wires can be used for the stator winding of the motor so as to make the motor compact. Use of a compact motor promotes solving problems attributable to limited space availability. It also contributes to reducing the unsprung load enabling the mobility (running performance) of the vehicle to be improved. Even when the battery voltage lowers, the voltage is supplied to the motor after being boosted. Performance of the brake is therefore prevented from dropping excessively and robustness of the vehicle can be maintained. Still furthermore, as described above, each of the wire harnesses used for connections between the sprung part and the unsprung part is required to be, at least, about one meter long. When a voltage drop attributable to wire harnesses is taken into consideration, using a small power current is advantageous because the voltage drop attributable to wire harnesses can be reduced. Eventually, power loss can be reduced and performance of the electric brake can be improved. A smaller current allows smaller-diameter wire harnesses to be used to improve wire harness flexibility.

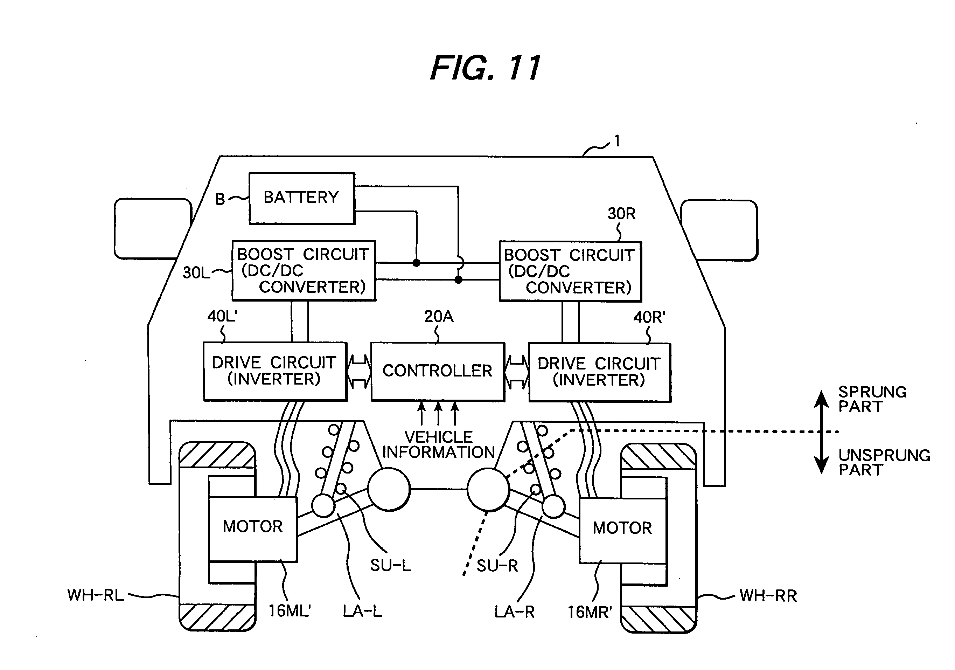

Next, with reference to FIGS. 10 and 11, a configuration of a motor system for a vehicle according to a third embodiment of the present invention will be described. Described in the following by way of an example is a motor system for a vehicle including in-wheel motors which are drive motors built into rear wheels. Even though, in the present example, the front wheels of a vehicle are driven by an engine with each of the rear wheels being a wheel with a built-in motor, the configuration being described in the following can be used also in a case where all of the four wheels are provided with in-wheel motors.

FIG. 10 is a system block diagram showing, in a planar state, an overall configuration of a vehicle equipped with the motor system for a vehicle according to the third embodiment of the present invention. FIG. 11 is a block diagram showing, in a sectional state, an overall configuration of the vehicle equipped with the motor system for a vehicle according to the third embodiment of the present invention. Of the reference numerals and letters used in FIGS. 10 and 11, those which are the same as reference numerals and letters used in FIGS. 1 and 2 or in FIGS. 6 and 7 denote the same parts as shown in FIGS. 1 and 2 or in FIGS. 6 and 7.

Motors 16MR' and 16ML' are three-phase synchronous motors like those shown in FIG. 1, but they are large, high-torque motors designed to generate a driving force required for the wheels WH-RR and WH-RL. Even though the motor system for a vehicle used in the present embodiment is a three-phase synchronous motor, it may be an asynchronous motor such as an induction motor.

In the present embodiment, drive circuits 40R' and 40L' are disposed in the sprung part. The drive circuits 40R' and 40L' each have a configuration similar to that shown in FIG. 4, but the capacitor Cf used in each of them is an electrolytic capacitor for the reason stated in the following.

The controller 20A sends control instructions to the drive circuits 40R and 40L', and the drive circuits 40R and 40L' PWM drive the motors 16MR' and 16ML'. The capacitor Cf, shown in FIG. 4, used in each of the drive circuits 40R' and 40L' is, therefore, a large capacity electrolytic capacitor. The drive circuits 40R' and 40L' make control so that the output voltages of the boost circuits 30R and 30L are kept constant. The boost circuits 30R and 30L each have a configuration similar to that shown in FIG. 4. Whereas the output voltages of the boost circuits 30R and 30L are kept constant, the drive circuits 40R' and 40L' control the motor current IM by means of PWM driving.

The switching controller/sensor processor included in the drive circuit 40R' has a configuration similar to that of the switching controller/sensor processor 42R' shown in FIG. 8. The switching controller/sensor processor controls turning on and off of the switching elements included in the drive circuit 40R, to convert DC voltages Vdc (+) and Vdc (-) supplied by the boost circuit 30R into a three-phase ac voltage with the three phases being phase U, phase V and phase W. The processor 42R' then supplies the AC voltage thus generated to the three-phase synchronous motor 16MR'. Further the switching controller/sensor processor controls turning on and off of the switching elements included in the boost circuit 30R, to boost a dc voltage (for example, 288 V) supplied by the battery B to, for example, 500 V. The voltage boosting ratio at the boost controller 32R is usually maintained such that a constant output voltage is obtained, but the voltage boosting ratio can be changed using a control instruction transmitted from the switching controller/sensor processor 42R'. When the battery voltage is adequately high, for example, boosting may be stopped so as to reduce loss due to voltage boosting.

The controller 20A and the switching controller/sensor processor are, as shown in FIG. 8, connected with two CAN buses CAN (H) and CAN (L). The communication protocol used in the present embodiment is CAN. A larger capacity protocol (for example, FlexRay) may be used in the future. Control instructions issued by the controller 20A to control the drive circuit 40R' are transmitted via the CAN buses CAN (H) and CAN (L). As shown in FIG., signals sensed by the rotational position sensor 44R and the temperature sensor 46R are used to drive the motor after being processed at the switching controller/sensor processor 42R. Part of the information is sent to the controller 20A via the CAN buses CAN (H) and CAN (L).

The motor 16MR' and the sensors 44R and 46R, shown in FIG. 8, are disposed in the unsprung part. The drive circuit 40R', the switching controller/sensor processor 42R', shown in FIG. 8, and the boost circuit 30R are disposed in the sprung part. The drive circuit 40R' and the motor 16MR are connected with three wire harnesses, that is, for phases U, V and W. For connections between the switching controller/sensor processor 42R and the sensors 44R, 46R, and 48R, a total of eight wire harnesses are used. That is, six (two inputs and four outputs) between the rotational position sensor 44R and the switching controller/sensor processor 42R, and two between the temperature sensor and the switching controller/sensor processor 42R.

The drive circuit 40R' has a configuration similar to that shown in FIG. 5, but the switches S1 to S6 are PWM driven as shown in FIG. 9. With the switches being PWM driven, it is possible to control the motor output torque by controlling the motor current.

As described above, in the present embodiment, with the drive circuit 40R' disposed in the sprung part, the unsprung load can be reduced and the mobility (running performance) of the vehicle can be improved. Also, a large-capacity capacitor (for example, an electrolytic capacitor) can be used as the capacitor included in the drive circuit 40R', so that it is possible to PWM drive the drive circuit 40R' and accurately control the motor current.

Furthermore, in the present embodiment, the battery voltage is supplied to the motor 16MR' after being boosted by the boost circuit 30R. In this way, compared with a case where the voltage is not boosted, the motor is powered using a high voltage and a small current. As the current flowing through the motor can be made small, small-diameter wires can be used for the stator winding of the motor so as to make the motor compact. Use of a compact motor promotes solving problems attributable to limited space availability. It also contributes to reducing the unsprung load thereby enabling the mobility (running performance) of the vehicle to be improved. Still furthermore, as described above, each of the wire harnesses used for connections between portions above and below the suspension is required to be, at least, about one meter long. When a voltage drop attributable to wire harnesses is taken into consideration, using a small power current is advantageous because the voltage drop attributable to wire harnesses can be reduced. Eventually, power loss can be reduced and performance of the electric brake can be improved. A smaller current allows a smaller-diameter wire harnesses to be used to improve wire harness flexibility.

## Claims

1. A motor system for a vehicle having suspensions between a car body and respective wheels, comprising:

   motors for the vehicle disposed in an unsprung part of the vehicle with reference to the suspensions, which are three-phase motors (16ML, 16MR),
   drive circuits (40L, 40R) disposed in the unsprung part of the vehicle (1), for driving the motors (16ML, 16MR) using rectangular-wave power, and
   voltage controllers disposed in a sprung part of the vehicle (1) with reference to the suspensions, for controlling voltages supplied from a battery B to the corresponding drive circuits.

2. The motor system for a vehicle according to claim 1, further comprising:

various sensors for the motors (16ML, 16MR) disposed, in the unsprung part of the vehicle (1), in a vicinity of the corresponding motors (16ML, 16MR),
drive controlling/sensor processing units disposed in the unsprung part, for controlling the corresponding drive circuits and processing outputs of the corresponding sensors,
a host control unit disposed in the sprung part, for controlling the drive circuits (40L, 40R) and the voltage controllers, and
communication buses connected between the host control unit and the drive controlling/sensor processing units.

3. The motor system for a vehicle according to claim 1 or 2, wherein each of the voltage controllers boosts and controls a voltage from the battery B, for supplying a corresponding one of the drive circuits (40L, 40R) with the controlled voltage.

4. A motor system for a vehicle having suspensions between a car body and respective wheels, and motors (16ML, 16MR) for the vehicle (1) disposed in an unsprung part of the vehicle (1) with reference to the suspensions, comprising:

drive circuits (40L, 40R) for driving the motors (16ML, 16MR) respectively, and
voltage controllers for boost-controlling voltages supplied from a battery B to the corresponding drive circuits (40L, 40R).

5. The motor system for a vehicle according to claim 4, wherein the motors (40L, 40R) are three-phase motors, and the drive circuits (16ML, 16MR) drive with PWM the corresponding three-phase motors respectively.

6. The motor system for a vehicle according to claim 4 or 5, wherein;

the motors (40L, 40R) are three-phase motors, and
the drive circuits (16ML, 16MR) drive the corresponding three-phase motors using rectangular-wave power respectively.

7. A motor system for a vehicle having suspensions between a car body and respective wheels, comprising:

motors (40L, 40R) for the vehicle (1) disposed in an unsprung part of the vehicle (1) with reference to the suspensions, which are three-phase motors, and
drive circuits (40L, 40R) disposed in the unsprung part of the vehicle (1), for driving the motors (40L, 40R) using rectangular-wave power.

EP 1 690 768 A1

# FIG. 1

FIG. 2

## FIG. 3

SPRUNG PART ←→ UNSPRUNG PART

BATTERY — +

GND    GND    B

BATT(+)
BATT(-)

Vcc SUPPLY    34R

BOOST CIRCUIT    30R

BOOST CON-TROLLER    32R

Vdc(+)
Vdc(-)

CAN(H)
CAN(L)
Vcc(+)
Vcc(-)

CAN(H)    CAN(L)

CON-TROLLER    20

DRIVE CIRCUIT    40R

U
V
W

MOTOR    16MR

TRANS-MISSION-TRANS-LATION CONVERSION    16CR

PAD    14R

ROTATIONAL POSITION SENSOR    44R

TEMPERA-TURE SENSOR    46R

THRUST SENSOR    48R

SWITCHING CONTROLLER / SENSOR PROCESSOR    42R

EP 1 690 768 A1

# FIG. 4

EP 1 690 768 A1

## FIG. 5

## FIG. 6

## FIG. 7

FIG. 8

## FIG. 9

## FIG. 10

FIG. 11

**European Patent Office**

**EUROPEAN SEARCH REPORT**

Application Number

EP 05 01 8503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/026989 A1 (SUZUKI HIDETOSHI ET AL) 12 February 2004 (2004-02-12) * abstract; figures * | 1 | INV. B60T13/74 B60L11/18 B60K7/00 |
| A,D | & PATENT ABSTRACTS OF JAPAN vol. 2003, no. 12, 5 December 2003 (2003-12-05) & JP 2004 122838 A (ASMO CO LTD), 22 April 2004 (2004-04-22) * abstract * | | |
| A | US 2004/036370 A1 (HILZINGER JUERGEN ET AL) 26 February 2004 (2004-02-26) * abstract * * paragraphs [0004], [0019]; figures * | 1 | |
| A | US 6 230 854 B1 (SCHWARZ RALF ET AL) 15 May 2001 (2001-05-15) * abstract * * column 1, line 43 - line 50 * * figures * | 1 | |
| A,P | DE 103 61 042 B3 (LUCAS AUTOMOTIVE GMBH) 25 May 2005 (2005-05-25) * abstract; figures * | 1 | TECHNICAL FIELDS SEARCHED (IPC) B60T B60L B60K |
| A | US 5 090 518 A (SCHENK ET AL) 25 February 1992 (1992-02-25) * abstract; figures * | 1 | |

The present search report has been drawn up for all claims

| Place of search | Date of completion of the search | Examiner |
|---|---|---|
| Berlin | 31 May 2006 | Ferro Pozo, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 8503

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2006

| Patent document cited in search report | | Publication date | Patent family member(s) | | Publication date |
|---|---|---|---|---|---|
| US 2004026989 | A1 | 12-02-2004 | DE | 10335671 A1 | 25-03-2004 |
| | | | JP | 2004122838 A | 22-04-2004 |
| US 2004036370 | A1 | 26-02-2004 | WO | 0170552 A1 | 27-09-2001 |
| | | | DE | 10014226 A1 | 27-09-2001 |
| | | | EP | 1268250 A1 | 02-01-2003 |
| | | | JP | 2004502097 T | 22-01-2004 |
| US 6230854 | B1 | 15-05-2001 | AU | 5853998 A | 15-07-1998 |
| | | | CZ | 9902019 A3 | 15-12-1999 |
| | | | DE | 19652230 A1 | 18-06-1998 |
| | | | WO | 9827357 A1 | 25-06-1998 |
| | | | EP | 0943061 A1 | 22-09-1999 |
| | | | JP | 2001507779 T | 12-06-2001 |
| | | | KR | 2000057578 A | 25-09-2000 |
| | | | PL | 333929 A1 | 31-01-2000 |
| | | | SK | 74499 A3 | 16-05-2000 |
| DE 10361042 | B3 | 25-05-2005 | WO | 2005063535 A1 | 14-07-2005 |
| US 5090518 | A | 25-02-1992 | NONE | | |

EPO FORM P0459

For more details about this annex : see Official Journal of the European Patent Office, No. 12/82